# EUROPEAN PATENT APPLICATION

(11) **EP 2 348 438 A1**
(43) Date of publication of application: **27.07.2011**
(21) Application number: 10251928.7
(22) Date of filing: 15.11.2010
(51) Int. Cl.: G06F 21/00, G07C 9/00

(54) **Using trajectory for authentication**

(30) Priority: 21.12.2009 US 643190
(71) Applicant: Intel Corporation, Santa Clara, CA 95052 (US)
(72) Inventor: Kohlenberg, Tobias M., Portland, Oregon 97219 (US); Mancini, Steven A., Forest Grove, Oregon 97116 (US); Clemens, Jonathan P., Dupont, Washington 98327 (US)
(74) Representative: Beresford, Keith Denis Lewis

(57) **Abstract**

An authentication system authenticates a device based on a detected trajectory of that device within a physical environment. The device includes a wireless transmitter that communicates with sensors distributed throughout the environment. As the device moves throughout the environment, the sensors send location information to an authentication system. The authentication system tracks the trajectory or dynamic location of the device and authenticates the device based on whether the observed trajectory of the device conforms with a predicted trajectory or behavior.

## Description

### Background

Authentication systems and intrusion detection systems are often used to control and/or detect unauthorized access to secure areas within the premises of a physical environment, such as a building. For instance, to gain access to or exercise privileges within a secure area, a person or device may be required to carry a badge or other identification device that can be swiped across a card reader or which may include a transmitter that allows the person or device to be recognized when in close proximity to a secure access point. Other authentication or intrusion systems may rely on location information to detect a person or device. These types of system typically employ triangulation methods to determine a static location at a specific point in time based on radio frequency (RF) signals from various transmitters in the system. However, static location techniques often cannot accurately locate the detected object or device. For instance, due to variations in the strength of the RF signals, the triangulated location of a device in a building may be off by several feet, which could potentially lead the detection system to erroneously believe that the device is in an area when it actually is not. These types of errors result in a lowered confidence level that a particular device or person is actually at a detected location, thus compromising the usefulness of location detection systems for authentication purposes.

### Brief Description of the Drawings

Fig. 1 is a block diagram of a system in accordance with an exemplary embodiment of the present invention.
Fig. 2 is a block diagram of an exemplary physical environment in which the system of Fig. 1 may be implemented, in accordance with one embodiment of the present invention.
Fig. 3 is a flow diagram of an exemplary authentication technique in accordance with one embodiment of the present invention.

### Detailed Description

In various embodiments, an authentication technique may be implemented that bases authentication and the authorization of privileges on tracking the dynamic location, path or trajectory, of a person or device within a particular environment. For instance, in some embodiments, the technique may base authentication on a comparison between a detected movement of a device with either an expected or predicted trajectory or a physically feasible trajectory, although the scope of the present invention is not limited in this regard. Using this comparison, if the detected trajectory is not expected, acceptable and/or is physically impossible or unlikely, then authentication to perform privileged tasks may be withheld, restricted or revoked altogether. Since a trajectory detection method uses multiple data points to determine movement, the technique provides for more accurate detection relative to static location systems that rely on only a single static data point to determine location. In addition, basing authentication on a tracked trajectory provides advantages over current authentication systems in which privileges are available to a particular person at all times or locations. Yet further, by tying authentication and authorization to the tracking of the device or person's dynamic location, the length of time that privileges are available may be restricted, thus providing for both a secure and flexible authentication system.

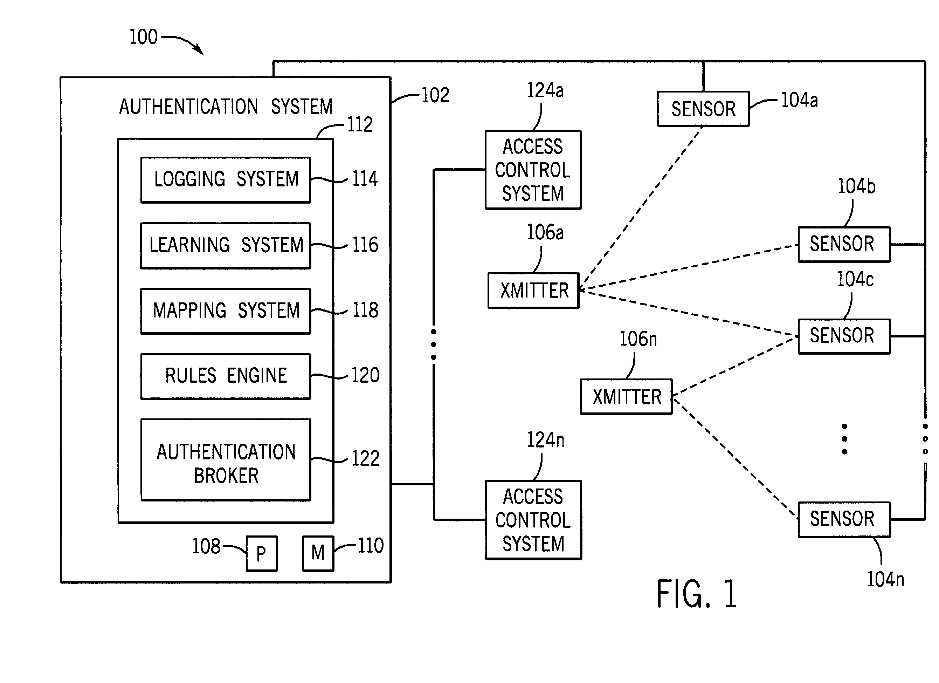

Referring now to Fig. 1, a block diagram of an exemplary location detection system 100 is shown in accordance with one embodiment of the present invention. As shown in Fig. 1, system 100 may include an authentication system 102 coupled to a plurality of sensors 104a-n. In one embodiment, sensors 104a-n are distributed throughout the premises of a building at locations suitable to track the movement or trajectory of a person or device within the building. Tracking is implemented through the use of a transmitter 106 which is attached to, embedded in or otherwise worn by the person or device. As shown in Fig. 1, multiple transmitters 106a-n may be active in the environment at any time. In the embodiment shown, the transmitters 106a-n are wireless transmitters that communicate with the sensors 104a-n via, for instance, RF signals, Bluetooth signals, cellular signals, infrared signals or any other suitable type of wireless communication. The sensors 104a-n may include one or more receivers to detect the signals transmitted by transmitters 106a-n and may include, for instance, one or more of an RF antenna, an RF identification (RFID) reader, Bluetooth antenna, a wireless network access point, a cellular tower or mini-cell repeater, an infrared receiver, etc. In addition to providing a signal to assist in locating the person or device, the transmitted wireless signal may carry various types of information, such as information sufficient to identify the person or device.

The sensors 104a-n communicate the information received from the one or more transmitters 106a-n to the authentication system 102. In some embodiments, the authentication system 102 may be a server or other processor-based device. As shown in Fig. 1, the authentication system 102 includes a processing device 108 (e.g., a microprocessor, microcontroller, etc.), a memory 110 and one or more other storage devices 112 for storing various applications and data, for instance. Memory 110 and storage device 112 may include both non-durable (e.g., RAM) and durable (e.g., a disk drive) storage elements and may further cooperate with the processing device 108 in executing instructions of software. In one embodiment, the storage device 112 includes a logging system 114, a learning system 116, a mapping system 118, a rules engine 120, and an authentication broker 122. Although the storage device 112 is shown as a single device, it should be understood that the storage device 112 may be distributed across multiple storage devices depending on the particular application in which the authentication system 102 is implemented. Moreover, it should be understood that while the various components 114, 116, 118, 120, and 122 are shown as separate modules, the various functions may be combined into a single module, may be separated in manners other than those shown, and may include fewer, more, or different functions than those shown. Moreover, the components 114, 116, 118, 120 and 122 may be implemented in software, hardware, or any combination thereof.

In the embodiment shown in Fig. 1, the mapping system 118 maintains the geography of the environment and the physical locations of each of the sensors 104a-n in the environment. For instance, if the detection system 100 is implemented in a building, the mapping system 118 may store and maintain a map of the various walls, hallways, stairwells, windows, and doorways that provide access to various rooms, as well as the locations of the sensors 104a-n in the building. Some or all of this information may be predetermined and loaded into the mapping system 118 by a system administrator upon initiation of the system 100. In other embodiments, the mapping system 118 may be configured to record further details of the environment after the system 100 is initiated.

Further in the embodiment shown in Fig. 1, the logging system 114 is configured to receive the communications from the sensors 104a-n which convey the location and identity of a particular person or device. The logging system 114 may store the information along with appropriate timestamps. In this manner, the logging system 114 may store information sufficient to track the trajectory of each person or device throughout the environment. In the exemplary embodiment shown, the learning system 116 monitors and manipulates the data collected by the logging system 114 to determine trajectories of the tracked persons or devices. In one embodiment, the learning system 116 applies known machine learning techniques to the collected information to create a set of normal behaviors for the various users and devices that move through the environment. For instance, in some embodiments of the invention, the environment may be an automated assembly area in which robotic handlers move between various assembly stations in a defined manner. By monitoring the information collected from the sensors 104a-n, the learning system 116 may learn the behavior patterns of the automated robots. Detected movement that then deviates from these learned patterns may be an indicator of an anomalous condition, such as the presence of an unauthorized device or person. As another example, through observation of the monitored data, the learning system 116 may derive typical pathways or transit times to move between two specific locations. Again, if movement is detected that deviates from this pattern (e.g., detours from the expected route, variations in speed, unexpected accelerations, etc.), then the system 100 may take appropriate corrective action.

The rules engine 120 shown in the embodiment of Fig. 1 contributes another layer of intelligence to the system 100. For instance, in one embodiment, the rules engine 120 may generate rules by applying physical principles to the geographic information maintained by the mapping system 118. As examples, the rules engine 120 may use prediction techniques to develop physics-based rules such as "it is not possible to move through a wall that has no doorway," "it is not possible for a person to accelerate faster than the speed of sound," etc. As another example, physics-based prediction suggests that a person or device will not be moving in one direction at a steady speed and then instantly move in the opposite direction at a much higher speed or instantaneously appear at a different location. If such movements are detected, then it would suggest that a device's (*e.g*., a cell phone) identity has been stolen by another device. In this situation, all authorizations may need to be revoked. As another example, physical principles would suggest that a device should not be able to move back and forth between two sides of a physical barrier (*e.g*., a wall) without first following a specific path (*e.g.,* a hallway) that leads to a known opening (*e.g*., a door) in that barrier. Thus, if this anomalous pattern of movement is detected, it may indicate that the location information being obtained from the sensors 104a-n either is not trustworthy or, again, that a device's identify may have been stolen. In such a situation, even if the user or device would normally have privileges when on one side of the barrier *(e.g*., in a room), the authentication system 102 may take corrective actions, such as withholding the privileges until further authentication can be obtained.

In addition to physical predictions, the rules engine 120 may maintain or generate behavioral rules derived from the learning system's 116 observation of the normal or expected behavior of a user or device. Here again, predictive principles, such as Bayesian path-based prediction models, would tend to suggest that if most devices (*e.g*., 90%) have taken a particular route through a particular space, then another device following that same route would most likely continue on that route. If the device fails to do so, then the device may not be like the other devices that have moved through the space. This observation may be particularly useful in automated environments, such as a fabrication facility in which robotic handlers move between stations. If a device in that environment does not appear like the other devices that have previously moved through the environment, then the new device should be treated with more suspicion and required to provide additional authentication. In some embodiments, the path-based prediction technique may also be used by the mapping function to automatically learn the layout of a physical space without having an administrator input the mapping information into the mapping system 118.

In addition to physics-based prediction and behavior-based prediction rules, the rules engine 120 also may maintain rules that have been input by an administrator of the system 100. For instance, it may be desirable to specify the order and number of sensor 104a-n detections that are necessary before a user may be authenticated and allowed to gain access to a particular area within the environment.

Referring again to the exemplary embodiment shown in Fig. 1, the learning system 116 and rules engine 120 are used by the authentication broker 122 to determine whether to grant an authentication request. For instance, in one embodiment, the authentication broker 122 may maintain a list of users and the various access privileges that have been granted to those users. The broker 122 may further be configured to accept requests from access control systems 124a-n in the environment, such as a card reader, proximity sensor, etc., regarding whether a particular user can be authenticated, the access rights that are assigned to that user, and whether access should be granted. For instance, a user whose movement has been tracked through the environment may attempt to access a secure area by presenting a badge to access control system 124a (e.g., a card reader). In this scenario, the card reader 124a may then send a request to the authentication broker 122 to determine whether the user may be allowed to enter the secure area. The authentication broker 122 may determine an appropriate response to the request by evaluating the user's tracked movement against the information provided by the rules engine 120 and/or the learning system 116. If any physical, behavioral and/or other rules have been violated (and/or if the user does not have the requisite privileges), then the broker 122 may send a response back to the access control system 124a denying the access request. In some embodiments, the authentication broker 122 may be configured to take other appropriate action, such as generating an alarm, locking down areas, revoking all privileges, requiring additional or another form of authentication, etc.

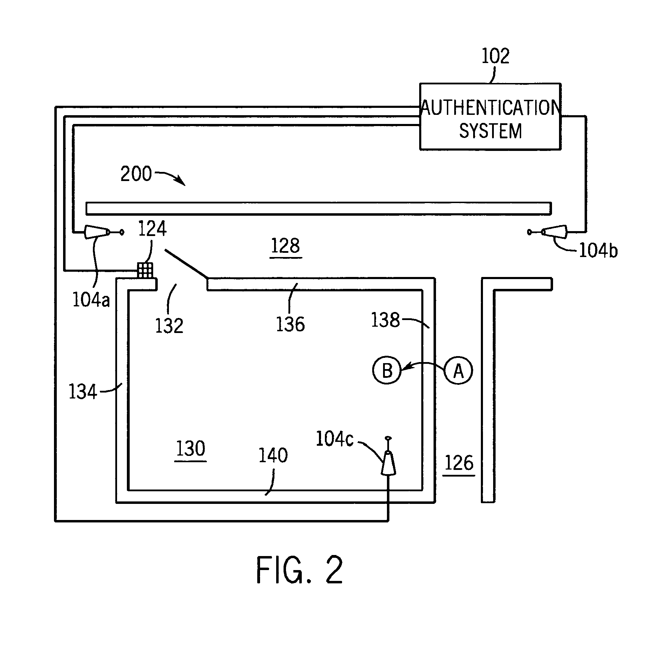

Fig. 2 provides an example of the application of the detection system 100 in an environment 200 that includes a first hallway 126, a second hallway 128, and a room 130 accessible by a doorway 132 having a card-controlled security access system 124. The room 130 is bounded by walls 134, 136, 138 and 140. Sensors 104a-c are arranged at various locations in the environment 200 and communicate with the authentication system 102 via an appropriate interconnect, such as a local area network, wide area network, etc. The access control system 124 also communicates with the authentication system 102 via the interconnect to request authentication for users desiring access and/or privilege authorizations. In this example, the authentication system 102 tracks the movement of a user over time as the user moves through the environment 200. In addition, the authentication system 102 understands the layout of the physical environment 200 because the geography of the space has been provided to the mapping system 118. Because of this knowledge of the physical space, the rules engine 120 in the authentication system 102 has developed rules that predict that the user should or should not be able to move in particular manners. For example, the system 102 understands that the user should not be able to directly move from location A in hallway 126 to location B in the room 130 since this would violate the rule that an object cannot move through barriers (*e.g*., the wall 138) that does not have a doorway. Thus, even if the user normally would have gained special privileges when in the room 130, if direct movement from location A to location B is observed, then the authentication system 102 may withhold the privileges that otherwise would have been available to the user in location B. If however, the system 102 has observed that the user has traveled a physically feasible path down hallway 126 and through hallway 128 to gain entrance to the room 130 through the doorway 132, then authentication may be provided and privileges granted.

In some embodiments, to strengthen the confidence in the tracked trajectory, the system 102 may further have a rule that the user must also authenticate himself to the card reader access control system 124 at the doorway 132 of the room 130. In such an embodiment, the user's privileges in the room 130 may be granted only after the system 102 has verified that the user's movement did not violate any physical (or behavioral or other) rules and that the further step of card authentication has been performed. In yet other embodiments, when the user's movement indicates that the user has left the room 130, then the authentication system 102 may act such that the room privileges will no longer be available to that user.

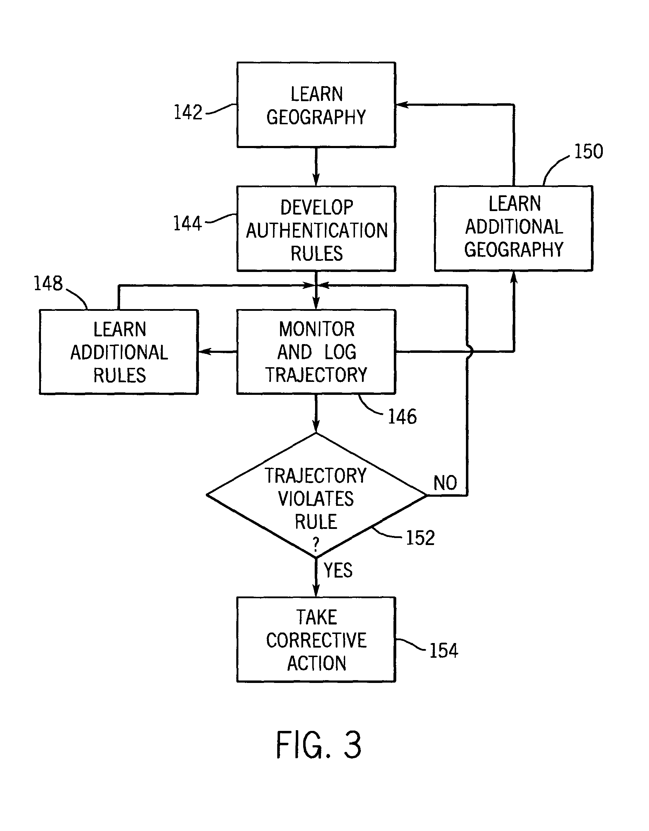

Fig. 3 illustrates an exemplary flow diagram of the authentication techniques described herein. At block 142, the geographical features of the particular environment in which the detection system 100 is employed are learned and provided to the mapping system 118. Here, the geography may be known and input by an administrator of the system 100, for instance. At block 144, the rules engine 120 and/or the learning system 116 develop authentication rules. These rules may be developed using physics-based and/or behavior-based prediction techniques and/or may be predetermined rules or authentication protocols that are input by an administrator of the system 100. Once the system 100 is initialized, movement over time (*i.e.,* the trajectory or path) of a user or device within the known environment is monitored and logged (block 146). At this point, in some embodiments, the monitored or observed trajectory or path may be used to develop additional authentication rules and, in particular, rules which predict normal or expected behavior based on the observed behavior of similar devices or other users in the environment (block 148). Also, in some embodiments, the tracked movement may be used to learn further details about the physical environment, and these details may be added to the mapping system 118 (block 150). In other embodiments, the physical layout may be learned through the use of an autonomic mobile device that is allowed to freely explore the physical environment. In such embodiments, the movement of the mobile device may be tracked or the mobile device may be configured to transmit information sufficient to generate a map of the environment.

At diamond 152, the authentication system 102 evaluates whether the monitored trajectory has violated any rules. In some embodiments, this evaluation may be triggered in response to receipt of an authentication request from an access control or security system 124. In other embodiments (particularly in intrusion detection systems), the evaluation may be performed continuously or at frequent intervals such that anomalous or physically impossible or infeasible movement may immediately trigger corrective action. At block 154, if one or more rules are violated, then the authentication system 102 takes appropriate corrective action, such as requesting further authentication, refusing privileges, revoking all privileges, generating an alarm, etc. For instance, if the observed trajectory does not conform with the predicted trajectory (e.g., because of either a route or speed deviation), then the system may not authenticate the device. However, as long as the tracked movement does not violate a rule, then the monitoring may simply continue.

Although the techniques disclosed herein have been described primarily with respect to an authentication system, it should be understood that the invention is not limited in this regard. For instance, the techniques also may be employed in other types of location detection systems, such as a system for detecting unauthorized intrusions into a particular area. As another example, the techniques may be used to grant access to infrastructure services (e.g., network access) only while a mobile client is located within a particular geographical area. For instance, mobile devices which ordinarily have access rights to an internal network (e.g., via the Dynamic Host Configuration Protocol (DHCP)) may exercise those access rights only when the mobile device is moving about within a particular geographical area. Once movement is detected outside of that area, the access rights may be revoked. As yet another example, the techniques described herein also may be implemented in a mobile environment, such as an aircraft carrier, etc. In such embodiments, the motion or trajectory of the person or object may be determined relative to the movement of the mobile environment.

Embodiments of the various techniques (including any technique implemented by the authentication system 102, including the technique of Fig. 3 may be implemented in code and may be stored on a storage medium (e.g., storage device 112) having stored thereon instructions which can be used to program a system to perform the instructions. The storage medium may include, but is not limited to, any type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), magnetic or optical cards, or any other type of media suitable for storing electronic instructions. The instructions of software may be loaded for execution by a processing device, such as the processing device 108 in Fig.
1. The processing device may include microprocessors, microcontrollers, processor modules or subsystems (including one or more microprocessors or microcontrollers), or other control or computing devices. It should be understood that a "controller" refers to hardware, software, or a combination thereof, and may be a single component or plural components (whether software or hardware). The data, data structures and instructions of the software discussed above can be provided on one computer-readable or computer-usable storage medium, or alternatively, can be provided on multiple computer-readable or computer-usable storage. Such computer-readable or computer-usable storage medium or media is (are) considered to be part of an article (or article of manufacture). An article or article of manufacture can refer to any manufactured single component or multiple components.

While the present invention has been described with respect to a limited number of embodiments, those skilled in the art will appreciate numerous modifications and variations therefrom. It is intended to cover all such modifications and variations to fall within the scope of the appended claims.

## Claims

1. A method, comprising:
determining a trajectory of a device within a physical environment; and
authenticating the device based on the determined trajectory.

2. The method as recited in claim 1, comprising:
comparing the determined trajectory with a set of physics-based rules; and
authenticating the device if the determined trajectory does not violate a physics-based rule.

3. The method as recited in claim 2, wherein the physics-based rule comprises a predicted trajectory and said method includes authenticating the device if the determined trajectory conforms with the predicted trajectory.

4. The method as recited in claim 3, wherein the predicted trajectory comprises a route and a speed.

5. The method as recited in claim 3, comprising:
tracking movement of a first device within the physical environment during a first time period; and
determining the predicted trajectory based on the tracked movement.

6. The method as recited in claim 5, further comprising mapping the physical environment based on the observed movement.

7. The method as recited in claim 3, comprising:
taking corrective action if the determined trajectory deviates from the predicted trajectory.

8. The method as recited in claim 7, wherein the corrective action includes at least one of refusing authentication, revoking a privilege, and generating an alarm.

9. A system comprising:
a transmitter to move throughout a physical environment;
a plurality of sensors distributed throughout the physical environment to detect the transmitter as it moves therethrough; and
an authentication system to receive information from the sensors corresponding to the detected movement of the transmitter, the authentication system to authenticate the transmitter based on the detected movement.

10. The system as recited in claim 9, further comprising an access control system to control access to an area within the physical environment and to request authentication of the transmitter from the authentication system.

11. The system as recited in claim 9, wherein the authentication system comprises a processor and a storage device coupled to the processor, the storage device to store a set of physics-based rules, and wherein the authentication system authenticates the transmitter if the detected movement does not violate a rule.

12. The system as recited in claim 11, wherein the authentication system generates the physics-based rules based on observed movement of a device within the physical environment over a period of time.

13. The system as recited in claim 11, wherein the physics-based rules define physically possible movement within the environment.

14. The system as recited in claim 11, the storage device further to store map information corresponding to the physical environment.

15. A computer-readable medium having instructions stored thereon which, when executed by a processor-based device, cause the processor-based device to perform the steps of any one of claims 1-8.
